(19) **Europäisches Patentamt / European Patent Office / Office européen des brevets**

(11) **EP 1 876 832 B1**

(12) **EUROPEAN PATENT SPECIFICATION**

(45) Date of publication and mention
of the grant of the patent:
**18.04.2012 Bulletin 2012/16**

(51) Int Cl.:
*H04N 7/26* (2006.01)    *H04N 7/36* (2006.01)
*H04N 7/46* (2006.01)    *H04N 7/50* (2006.01)

(21) Application number: **07019717.3**

(22) Date of filing: **10.01.2003**

(54) **Method for block prediction of a bi-predictive picture in direct mode**

Verfahren zur Blockprädiktion eines biprädiktiven Bildes im Direktmodus

Procédé de prédiction d'un bloc d'une image bi-prédictive dans un mode direct

(84) Designated Contracting States:
**FI FR IT SE**

(30) Priority: **09.04.2002 KR 20020019262**
**21.11.2002 KR 20020072862**

(43) Date of publication of application:
**09.01.2008 Bulletin 2008/02**

(62) Document number(s) of the earlier application(s) in
accordance with Art. 76 EPC:
**03000442.8 / 1 359 769**

(73) Proprietor: **LG Electronics, Inc.**
**Seoul 150-721 (KR)**

(72) Inventor: **Jeon, Byeong Moon**
**Seoul (KR)**

(74) Representative: **Menges, Christian Alexander et al**
**Diehl & Partner GbR**
**Augustenstr. 46**
**80333 München (DE)**

(56) References cited:
**EP-A- 0 863 674     WO-A-01/33864**

- **"WORKING DRAFT NUMBER 2, REVISION 2 (WD-2)" DOCUMENT JVT-B118R2, 29 January 2002 (2002-01-29), pages 1-10, XP001086630**
- **TSUHAN CHEN ET AL: "A new frame interpolation scheme for talking head sequences" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. 3, 23 October 1995 (1995-10-23), pages 591-594, XP010197038 ISBN: 0-7803-3122-2**

**Description**

BACKGROUND OF THE INVENTION

1. Field of the Invention

The present invention relates to a moving picture coding system, and particularly, to a block prediction method using improved direct mode for a B picture.

2. Description of the Background Art

In a moving picture coding system, one of advantages for using B picture is that a direct prediction mode which does not add overhead information is selected more than any other prediction modes (a forward prediction, a backward prediction, a bidirectional prediction and intra prediction, etc.). Therefore, the moving picture coding system is able to have higher coding efficiency when using the B picture than the coding efficiency when using only P picture.

In the B picture, the block prediction method using the direct mode is to calculate forward motion vector and backward motion vector as scaled versions of a motion vector of a co-located block in a backward reference picture for direct mode, to obtain two distinct motion-compensated blocks using above motion vectors, and to obtain predicted block by averaging two motion-compensated blocks finally.

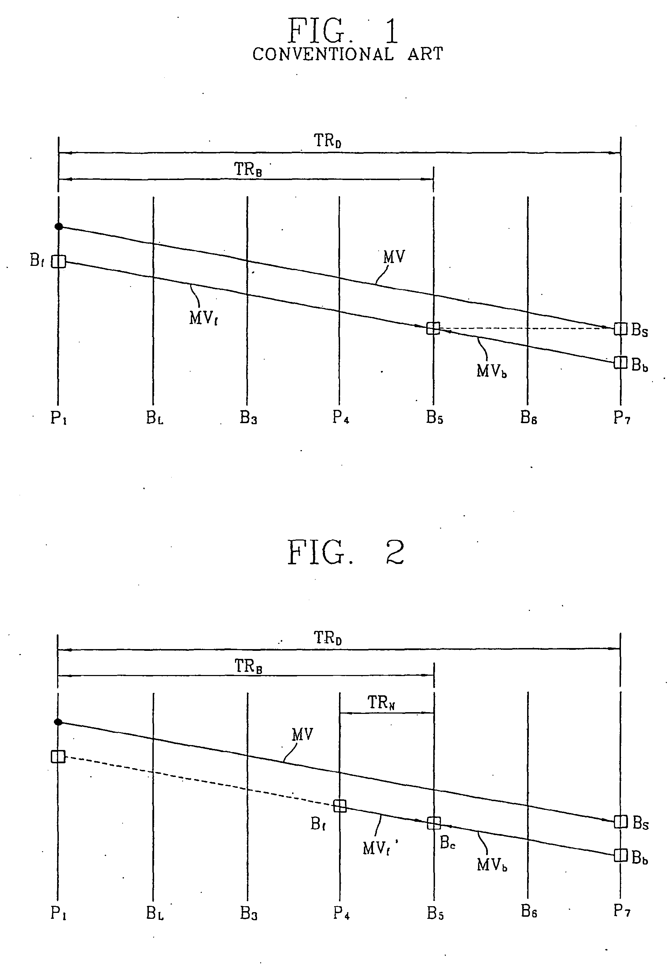

The block prediction method using the direct mode as above will be described in more detail with reference to Figure 1.

Figure 1 is a view showing a picture pattern for describing the block prediction method using the direct mode according to the conventional art. As shown therein, the picture pattern comprises an I-picture (not shown) coded using prediction only from decoded samples within the same picture, P pictures P1, P4, and P7 coded by inter prediction using at most one motion vector from previously-decoded reference pictures, and B-pictures B2, B3, B5 and B6 coded by two inter prediction blocks from previously-decoded reference pictures.

Also, parameters shown in Figure 1 will be described first for the convenience' sake. $TR_D$ represents a temporal distance between a forward reference picture for direct mode (P1) and a backward reference picture for direct mode (P7), $TR_B$ represents a temporal distance between the forward reference picture for direct mode (P1) and a current B picture (B5), MV represents a motion vector of a co-located block in the backward reference picture for direct mode (P7), $MV_f$ represents a forward motion vector of direct mode pointing to the forward reference picture for direct mode, and $MV_b$ represents a backward motion vector of direct mode pointing to the backward reference picture for direct mode. Herein, the forward reference picture for direct mode is a reference picture pointed by the motion vector of the co-located block in the backward reference picture for direct mode.

The block prediction method for direct mode will be described using above parameters as follows.

First, the forward motion vector of direct mode ($MV_f$) is obtained from a motion vector (MV) of a co-located block $B_s$ in the backward reference picture for direct mode (P7) by applying following equation (1).

$$MV_f = \frac{TR_B \times MV}{TR_D} \text{------------------------------------------------------} \quad (1)$$

In addition, the backward motion vector of direct mode ($MV_b$) is obtained from a motion vector (MV) of the co-located block $B_s$ in the backward reference picture for direct mode (P7) by applying following equation (2).

$$MV_b = (TR_B - TR_D) \times \frac{MV}{TR_D} \text{-----------------------------------------} \quad (2)$$

Therefore, blocks $B_f$ and $B_b$ are motion-compensated using the motion vectors $MV_f$ and $MV_b$ calculated from equations (1) and (2), and after that, the two ' blocks are averaged to get a prediction value $B_c$' of a current block $B_c$ in the B picture as following equation (3).

$$B_c' = \frac{B_f + B_b}{2} \quad \text{------------------------------------------------} \quad (3)$$

However, according to the block prediction method for the direct mode of the conventional art, the forward motion vector of direct mode is obtained from the motion vector of the co-located block in the backward reference picture for direct mode, and therefore, the obtained value is just an approximated value, not a precise motion vector of the current block of the B picture.

Also, according to the block prediction method for direct mode of the conventional art, even though the reference picture temporally close to the B picture has higher similarity with the B picture, the block prediction is made using the average of two distinct motion-compensated blocks without considering temporal distance between the reference pictures. Therefore, the accuracy of predicted block is lowered.

Especially, in a sequence having a fading scene, since brightness of continuous B pictures can be gradually darkened or gradually lightened, the prediction value obtained by simply averaging two motion-compensated blocks has a lot of difference from the original value, and thereby the coding efficiency of the entire system is greatly lowered.

EP 0 863 674 discloses a system for coding of digital video images such as bi-directionally predicted video object planes (B-VOPs), in particular, where the B-VOP and/or a reference image used to code the B-VOP is interlaced coded. For a B-VOP macroblock which is co-sited with a field predicted macroblock of a future anchor picture, direct mode prediction is made by calculating four field motion vectors, then generating the prediction macroblock. The four field motion vectors and their reference fields are determined from an offset term of the current macroblock's coding vector, the two future anchor picture field motion vectors, the reference field used by the two field motion vectors of the co-sited future anchor macroblock, and the temporal spacing in field periods, between the current B-VOP fields and the anchor fields. To derive pixel data of a picture, the document uses averaging between forward and backward pictures. This documents reflects the preamble of independent claim 1.

WO 01/33864 discloses a method of encoding a sequence of pictures, each picture being partitioned into non-overlapping blocks of pixels, the method comprising, for a block belonging to a picture to be encoded on the basis of a past reference frame and a future reference frame, hereafter referred to as a block to be encoded, at least the steps of deriving for a block in the future reference frame with the same location as the block to be encoded, an optimum motion vector on the basis of the past reference frame and a corresponding optimum prediction block in the past reference frame, deriving the sum of absolute difference between the block in said future reference frame with the same location as the block to be encoded and the optimum prediction block in the past reference frame, hereafter referred to as SADref, deriving for the block to be encoded, a forward motion vector on the basis of the optimum motion vector and a corresponding forward prediction block in the past reference frame, deriving the sum of absolute difference between the block to be encoded and the forward prediction block, hereafter referred to as SADf, deriving for the block to be encoded, a backward motion vector on the basis of the optimum motion vector and a corresponding backward prediction block in the future reference frame, deriving the sum of absolute differences between the block to be encoded and the backward prediction block, hereafter referred to as SADb, encoding the block to be encoded according to a direct prediction mode if one of the following conditions is satisfied: the spatial coordinates of the optimum motion vector are within a given range, the deviation of SADref towards SADb is smaller than a given threshold, the deviation of SADref towards SADf is smaller than a given threshold.

Document "Joint Video Team (JVT) of ISO/IEC MPEG and ITU-T VCEG: Working Draft Number 2 Revision 2 of ITU-T Recommendation H.26L and MPEG-4/Part 10" of Thomas Wiegand discloses five different prediction modes for bi-predictive pictures that were under discussion for a future standard in December 2001. According to a proposal, prediction blocks for the direct and bidirectional prediction mode are calculated by using forward and backward motion vectors to obtain appropriate blocks from reference fames, and then these blocks are averaged by dividing the sum of the two prediction blocks by two.

A technique generating smooth head motion and rendering lip motion that is synchronised with the voice of a person is disclosed by the article "A new frame interpolation scheme for talking head sequences" of Tsuhan Chen, Yao Wang, Hans Peter Graf and Cassandra Swain. This article was published in the proceedings of the international conference on image processing on Oct. 23-26 1995 in Washington. According to this article, a mesh (i.e., a control grid) is set up for the foreground area in a frame $f2$. Next, for each node of the mesh in frame $f2$, a corresponding node is determined in a frame $f1$ so that the two images match well after warping one to the other based on the nodal correspondences in the two meshes. This is accomplished by the energy minimization approach. Finally, assuming the motion velocity of each node is constant between $f1$ and $f2$, the nodal positions in the interpolated frame fint are linearly interpolated from those in $f1$ and $f2$ i.e., with weights T2/(T1 +T2) and T1/(T1 + T2).

## SUMMARY OF THE INVENTION

It is the object of the present invention to provide a block prediction method using direct mode, which has improved coding efficiency and an improved accuracy of the predicted block.

The above object is solved by the combination of features of independent claim 1. Preferred embodiments are defined by the dependent claims.

The foregoing and other objects, features, aspects and advantages of the present invention will become more apparent from the following detailed description of the present invention when taken in conjunction with the accompanying drawings.

## BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is a view showing a picture pattern for describing a block prediction method for direct mode according to the conventional art;

Figure 2 is a view showing a picture pattern for describing a block prediction method for direct mode according to the present invention;

Figure 3 is a view showing a picture pattern for describing an interpolative prediction method according to an embodiment of the present invention; and

Figure 4 is a view showing a picture pattern for describing an interpolative prediction method according to another embodiment of the present invention.

## DETAILED DESCRIPTION OF THE PREFERRED EMBODIMENTS

Reference will now be made in detail to the preferred embodiments of the present invention, examples of which are illustrated in the accompanying drawings.

In a block prediction method for direct mode according to the present invention, a forward motion vector and a backward motion vector of direct mode are calculated from a motion vector of a co-located block in a backward reference picture for direct mode, two motion-compensated blocks are obtained using above motion vectors, and finally, a predicted block is obtained by interpolating two motion-compensated blocks.

Also, in the block prediction method using direct mode according to the present invention, the backward motion vector is calculated from the backward reference picture for direct mode, a forward motion vector of direct mode is calculated from the reference picture closest to the current B picture among the forward reference pictures, and motion-compensated blocks are obtained from above motion vectors, and finally, a predicted block is obtained by interpolating two motion-compensated blocks.

Hereinafter, an embodiment of the present invention will be described with reference to accompanying Figures as follows.

Figure 2 shows a picture pattern for describing the block prediction method for direct mode according to the present invention. As shown therein, the picture pattern comprises an I-picture (not shown) coded using prediction only from decoded samples within the same picture, P pictures P1, P4, and P7 coded by inter prediction using at most one motion vector from previously-decoded reference pictures, and B-pictures B2, B3, B5 and B6 coded by two inter prediction blocks from previously-decoded reference pictures.

Parameters shown in Figure 2 will be described first for the convenience' sake. $TR_D$ represents a temporal distance between a forward reference picture for direct mode (P1) and a backward reference picture for direct mode (P7), $TR_B$ represents a temporal distance between the forward reference picture for direct mode (P1) and a current B picture (B5), $TR_N$ represents a temporal distance between the reference picture (P4) closest to the current B picture and the current B picture (B5), MV represents a motion vector of a co-located block in the backward reference picture for direct mode (P7), $MV_f'$ represents a forward motion vector of direct mode pointing to the reference picture (P4) closest to the current B picture, and $MV_B$ represents a backward motion vector of direct mode pointing to the backward reference picture for direct mode (P7).

At that time, the motion vector (MV) of the co-located block $B_S$ in the backward reference picture for direct mode (P7) is obtained in the process of coding (or decoding) the backward reference picture for direct mode before the current B picture is coded (or decoded).

The block prediction method for direct mode as constructed above according to the present invention will be described as follows.

The forward motion vector (MV,'), which points to the reference picture (P4) having the closest temporal distance among the forward reference pictures, is obtained from following equation (4).

$$MV_f' = \frac{TR_N \times MV}{TR_D} \quad \text{---------------------------------------} \quad (4)$$

In addition, the backward motion vector (MV$_b$), which points to the backward reference picture for direct mode (P7), is obtained from the conventional art using following equation (2).

$$MV_b = (TR_B - TR_D) \times \frac{MV}{TR_D} \quad \text{--------------------------------} \quad (2)$$

Accordingly, motion-compensated blocks B$_f$ and B$_b$ are obtained using the motion vectors MV$_f$' and MV$_b$ calculated by the equations (2) and (4).

On the other hand, the predicted value B$_c$' for the block B$_c$ is obtained from the above two motion-compensated blocks B$_f$ and B$_b$. At that time, the B picture may be located closer to one between the reference picture in which the motion-compensated block B$_f$ exists and the backward reference picture for direct mode in which the motion-compensated block B$_b$ exists.

The block prediction method using direct mode according to the present invention can be applied to Figures 1 and 2, and therefore, the reference picture in which the motion-compensated block B$_f$ exists is the forward reference picture for direct mode (for example, P1 picture in Figure 1) or the reference picture closest to the B picture (for example, P4 picture in Figure 2).

Moreover, in a sequence having a fading scene, the brightness of continuous B pictures can be gradually darkened or gradually lightened, and therefore, the predicted value obtained by simply averaging the two motion-compensated blocks B$_f$ and B$_b$ as in the conventional art has a large difference from the actually original value. Therefore, the coding efficiency is lowered significantly.

Therefore, the block prediction method using direct mode according to the present invention performs the interpolative prediction considering the temporal distance between the current B picture and the reference picture in which the motion-compensated block B$_f$ exists (that is, the forward reference picture for direct mode or the reference picture closest to the B picture), and considering the temporal distance between the current B picture and the backward reference picture for direct mode, in order to improve the accuracy of the block predicted by the direct mode.

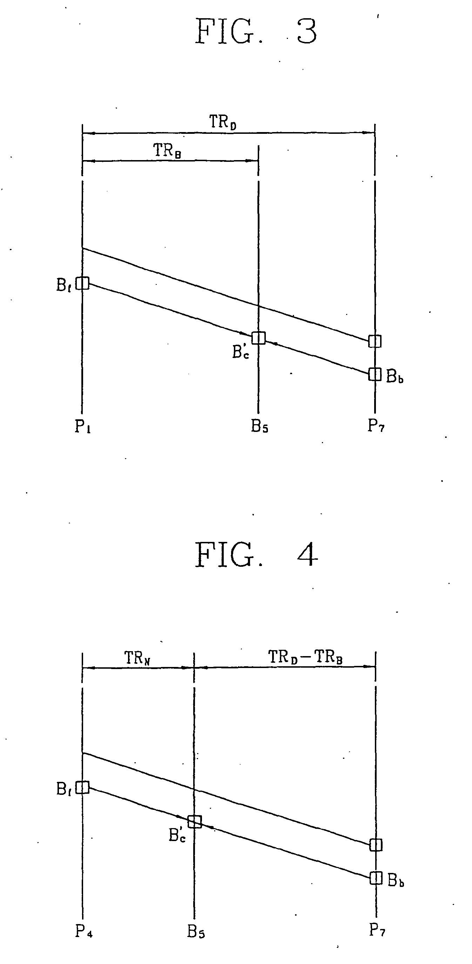

As shown in Figure 3, if the forward motion vector of direct mode is obtained using the conventional art, the motion-compensated block B$_f$ exists in the forward reference picture for direct mode (P1) and the motion-compensated block B$_b$ exists in the backward reference picture for direct mode (P7), the interpolative prediction as following equation (5) is performed. Herein, TR$_D$ is the temporal distance between the forward reference picture for direct mode (P1) and the backward reference picture for direct mode (P7), and TR$_B$ is the temporal distance between the forward reference picture for direct mode (P1) and the current B picture (B5). Especially, the interpolative prediction method includes the same averaging calculation as the conventional art for a case that the B picture is located on a center between the forward reference picture for direct mode and the backward reference picture for direct mode.

$$B_c' = B_f \times \frac{(TR_D - TR_B)}{TR_D} + B_b \times \frac{TR_B}{TR_D} \quad \text{-----------------------} \quad (5)$$

Also, as shown in Figure 4, in case that the forward motion vector of direct mode is obtained according to the present invention, the motion-compensated block B$_f$ exists in the reference picture (P4) closest to the current B picture, and the motion-compensated block B$_b$ exists in the backward reference picture for direct mode (P7). Therefore, the interpolative prediction as following equation (6) is performed. Herein, TR$_D$ is the temporal distance between the forward reference picture for direct mode (P1) and the backward reference picture for direct mode (P7), and TR$_B$ is the temporal distance between the forward reference picture for direct mode (P1) and the current B picture, and TR$_N$ is the temporal distance between the reference picture (P4) closest to the current B picture and the current B picture.

$$B_C' = B_f \times \frac{(TR_D - TR_B)}{(TR_N + TR_D - TR_B)} + B_b \times \frac{TR_N}{(TR_N + TR_D - TR_B)} \quad \text{------------ (6)}$$

On the other hand, the respective pictures can be represented using a picture order counter, that is, display order information.

Therefore, the equations (5) and (6) can be represented as following equation (7) using the picture order count values, which are the display order information of respective pictures. Herein, $T_c$ is a picture order count value, that is, the display order information allocated to the current B picture, $T_f$ is a picture order count value, that is, the display order information allocated to the forward reference picture for direct mode or a picture order count value, that is, the display order information allocated to the reference picture closest to the B picture in case that the forward motion vector is calculated by the equation (4), and $T_b$ is a picture order count value, that is, the display order information allocated to the backward reference picture for direct mode.

$$B_C' = B_f \times \frac{(T_b - T_c)}{(T_b - T_f)} + B_b \times \frac{(T_c - T_f)}{(T_b - T_f)} \quad \text{------------------------------------} \quad (7)$$

As described above, according to the present invention, the forward motion vector of direct mode is obtained from the motion vector of the co-located block in the backward reference picture for direct mode, and a predicted block of the B picture, which is about to be coded, is obtained by applying interpolative prediction to the motion-compensated block values. Therefore, the coding efficiency is improved when comparing to that of the conventional art.

Also, according to the present invention, the forward motion vector of direct mode is obtained from the reference picture closest to the B picture which is about to be coded (or decoded) presently and having higher similarity with the B picture, and the predicted block of the B picture is obtained by applying the interpolative prediction to the blocks which are motion-compensated from above forward motion vector and backward motion vector of direct mode. Therefore, the accuracy of the predicted block can be improved and the coding efficiency can be improved.

**Claims**

1. A method of predicting a block of a bi-predictive picture to be coded or decoded in direct mode, the method comprising:

   a first step for calculating forward ($MV_f$) and backward ($MV_b$) motion vectors for the block in the bi-predictive picture ($B_5$) ;
   a second step for obtaining a forward motion-compensated block ($B_f$) using the forward motion vector ($MV_f$) and a forward reference picture (P7), and obtaining a backward motion-compensated block ($B_b$) using the backward motion vector ($MV_b$) and a backward reference picture ($P_7$); and
   a third step for predicting the block ($B_c'$) in the bi-predictive picture ($B_5$), wherein the block (B5') in the bi-predictive picture ($B_5$) is predicted from said forward motion-compensated block ($B_f$) and said backward motion-compensated block ($B_b$) by weighting the motion-compensated blocks ($B_f$, $B_b$) with a first temporal distance ($TR_B$) and a second temporal distance ($TR_D$) and adding up the weighted motion-compensated blocks,
   wherein the forward motion vector ($MV_f$) and backward motion vector ($MV_b$) for the block ($B_c'$) in the bi-predictive picture ($B_5$) are calculated from a motion vector (MV) of a co-located block ($B_s$) in the backward reference picture ($P_7$), based on first and second temporal distances ($TR_B$, $TR_D$),
   wherein the forward motion vector ($MV_f$) and the backward motion vector ($MV_b$) are obtained by scaling the motion vector (MV) of the co-located block ($B_s$) in the backward reference picture ($P_7$).

2. The method of claim 1, wherein the forward motion vector ($MV_f$) in the first step is obtained from a reference pictures ($P_4$) closest to the bi-predictive picture ($B_s$) to be coded or decoded among the forward reference pictures ($P_1$, $P_4$).

3. The method of claim 1 or 2, wherein the backward.motion vector ($MV_b$) in the first step is obtained from a backward

reference picture ($P_7$) for the bi-predictive picture ($B_5$).

4. The method of one of claims 1 to 3, wherein the first temporal distance ($TR_B$) is between the forward reference picture ($P_1$) and the bi-predictive picture ($B_5$), and the second temporal distance ($TR_D$) is between the forward reference picture ($P_1$) and the backward reference picture ($P_7$).

5. The method of one of the preceding claims, wherein the scaling the motion vector (MV) is based on the first and second temporal distances.

## Patentansprüche

1. Verfahren zur Prädiktion eines Blocks eines bi-prädiktiven Bildes, das im Direktmodus zu codieren oder zu decodieren ist, wobei das Verfahren Folgendes umfasst:

   einen ersten Schritt zum Berechnen von Vorwärts- ($MV_f$) und Rückwärtsbewegungsvektoren ($MV_b$) für den Block im bi-prädiktiven Bild ($B_5$);
   einen zweiten Schritt zum Erhalten eines vorwärtsbewegungskompensierten Blocks ($B_f$) unter Verwendung des Vorwärtsbewegungsvektors ($MV_f$) und eines Vorwärtsreferenzbildes ($P_1$) und zum Erhalten eines rückwärtsbewegungskompensierten Blocks ($B_b$) unter Verwendung des Rückwärtsbewegungsvektors ($MV_b$) und eines Rückwärtsreferenzbildes ($P_7$); und
   einen dritten Schritt zur Prädiktion des Blocks ($B_c$') im bi-prädiktiven Bild ($B_5$), wobei die Prädiktion des Blocks ($B_c$') im bi-prädiktiven Bild ($B_5$) anhand des vorwärtsbewegungskompensierten Blocks ($B_f$) und des rückwärtsbewegungskompensierten Blocks ($B_b$) durch Gewichten der bewegungskompensierten Blöcke ($B_f$, $B_b$) mit einer ersten zeitlichen Distanz ($TR_B$) und einer zweiten zeitlichen Distanz ($TR_D$) und Summieren der gewichteten bewegungskompensierten Blöcke erfolgt,
   wobei der Vorwärtsbewegungsvektor ($MV_f$) und der Rückwärtsbewegungsvektor ($MV_b$) für den Block ($B_c$') im bi-prädiktiven Bild ($B_5$) anhand eines Bewegungsvektors (MV) eines co-lokalisierten Blocks ($B_S$) im Rückwärtsreferenzbild ($P_7$) auf der Grundlage von ersten und zweiten zeitlichen Distanzen ($TR_B$, $TR_D$) berechnet werden,
   wobei der Vorwärtsbewegungsvektor ($MV_f$) und der Rückwärtsbewegungsvektor ($MV_b$) durch Skalieren des Bewegungsvektors (MV) des co-lokalisierten Blocks ($B_S$) im Rückwärtsreferenzbild ($P_7$) erhalten werden.

2. Verfahren gemäß Anspruch 1, wobei der Vorwärtsbewegungsvektor ($MV_f$) im ersten Schritt aus einem Referenzbild ($P_4$) erhalten wird, das unter den Vorwärtsreferenzbildern ($P_1$, $P_4$) am nächsten am zu codierenden oder zu decodierenden bi-prädiktiven Bild ($B_5$) liegt.

3. Verfahren gemäß Anspruch 1 oder 2, wobei der Rückwärtsbewegungsvektor ($MV_b$) im ersten Schritt aus einem Rückwärtsreferenzbild ($P_7$) für das biprädiktive Bild ($B_5$) erhalten wird.

4. Verfahren gemäß einem der Ansprüche 1 bis 3, wobei die erste zeitliche Distanz ($TR_B$) die Distanz zwischen dem Vorwärtsreferenzbild ($P_1$) und dem bi-prädiktiven Bild ($B_5$) ist und die zweite zeitliche Distanz ($TR_D$) die Distanz zwischen dem Vorwärtsreferenzbild ($P_1$) und dem Rückwärtsreferenzbild ($P_7$) ist.

5. Verfahren gemäß einem der vorhergehenden Ansprüche, wobei das Skalieren des Bewegungsvektors (MV) auf der ersten und der zweiten zeitlichen Distanz gründet.

## Revendications

1. Méthode de prédiction d'un bloc d'une image bi-prédictive à coder ou décoder en mode direct, la méthode comprenant :

   une première étape pour calculer des vecteurs de mouvement vers l'avant ($MV_f$) et vers l'arrière ($MV_b$) pour le bloc dans l'image bi-prédictive ($B_5$) ;
   une deuxième étape pour obtenir un bloc à mouvement compensé vers l'avant ($B_f$) en utilisant le vecteur de mouvement vers l'avant ($MV_f$) et une image de référence avant ($P_1$), et obtenir un bloc à mouvement compensé vers l'arrière ($B_b$) en utilisant le vecteur de mouvement vers l'arrière ($MV_b$) et une image de référence arrière ($P_7$) ; et

une troisième étape pour prédire le bloc ($B_c$') dans l'image bi-prédictive ($B_5$), dans laquelle le bloc ($B_c$') dans l'image bi-prédictive ($B_5$) est prédit à partir dudit bloc à mouvement compensé vers l'avant ($B_f$) et dudit bloc à mouvement compensé vers l'arrière ($B_b$) en pesant les bloc à mouvement compensé ($B_f$, $B_b$) avec une première distance temporelle ($TR_B$) et une seconde distance temporelle ($TR_D$) et en additionnant les blocs à mouvement compensé pesés,

dans laquelle le vecteur de mouvement vers l'avant ($MV_f$) et le vecteur de mouvement vers l'arrière ($MV_b$) pour le bloc ($B_c$') dans l'image bi-prédictive ($B_5$) sont calculés à partir d'un vecteur de mouvement (MV) d'un bloc co-localisé ($B_S$) dans l'image de référence arrière ($P_7$), sur la base de première et seconde distances temporelles ($TR_B$, $TR_D$),

dans laquelle le vecteur de mouvement vers l'avant ($MV_f$) et le vecteur de mouvement vers l'arrière ($MV_b$) sont obtenus en ajustant le vecteur de mouvement (MV) du bloc co-localisé ($B_S$) dans l'image de référence arrière ($P_7$).

2. Méthode de la revendication 1, dans laquelle le vecteur de mouvement vers l'avant ($MV_f$) dans la première étape est obtenu à partir d'une image de référence ($P_4$) la plus proche de l'image bi-prédictive ($B_5$) à coder ou décoder parmi les images de référence avant ($P_1$, $P_4$).

3. Méthode de la revendication 1 ou la revendication 2, dans laquelle le vecteur de mouvement vers l'arrière ($MV_b$) dans la première étape est obtenu à partir d'une image de référence arrière ($P_7$) pour l'image bi-prédictive ($B_5$).

4. Méthode de l'une des revendications 1 à 3, dans laquelle la première distance temporelle ($TR_B$) est entre l'image de référence avant ($P_1$) et l'image bi-prédictive ($B_5$), et la seconde distance temporelle ($TR_D$) est entre l'image de référence avant ($P_1$) et l'image de référence arrière ($P_7$).

5. Méthode de l'une des revendications précédentes, dans laquelle l'ajustement du vecteur de mouvement (MV) est basé sur les première et seconde distances temporelles.

# FIG. 1
## CONVENTIONAL ART

# FIG. 2

# FIG. 3

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0863674 A

- WO 0133864 A

**Non-patent literature cited in the description**

- **Thomas Wiegand.** *Joint Video Team (JVT) of ISO/IEC MPEG and ITU-T VCEG: Working Draft Number 2 Revision 2 of ITU-T Recommendation H.26L and MPEG-4/Part 10,* December 2001

- **Tsuhan Chen ; Yao Wang ; Hans Peter Graf ; Cassandra Swain.** A new frame interpolation scheme for talking head sequences. *proceedings of the international conference on image processing,* 23 October 1995